# EUROPEAN PATENT APPLICATION

(11) **EP 3 530 554 A1**
(43) Date of publication of application: **28.08.2019**
(21) Application number: 19158082.8
(22) Date of filing: 19.02.2019
(51) Int. Cl.: B62H 1/02

(54) **BICYCLE KICKSTAND**

(30) Priority: 21.02.2018 IT 201800002886
(71) Applicant: URSUS S.p.A., 36027 Rosà (VI) (IT)
(72) Inventor: FERRONATO, Sergio, 36027 ROSA' VI (IT)
(74) Representative: Modiano, Micaela Nadia

(57) **Abstract**

Bicycle kickstand (10), comprising: an anchoring bracket (11), the bracket (11) being provided with a block (15) which comprises a first, cam-shaped element (16), the first element (16) having a first portion (17a) which defines a stowed configuration for the bicycle kickstand (10) and a second portion (17b) which defines a deployed configuration for the bicycle kickstand (10); a supporting rod (13) which comprises a pivoting head (14), which is coupled within the block (15), the supporting rod (13) being provided with a second shaped element (19), which is shaped complementarily to the first element (16) of the block (15) and is in contact with it.

The region of interaction between the first shaped element (16) and the second shaped element (19) is within the profile of the block (15) and is hidden from view.

## Description

The present invention relates to a bicycle kickstand.

Nowadays kickstands are widespread for city bikes, mountain bikes and the like, which are constituted by a bracket for affixing to the lower portion of the frame of a bicycle, from which a supporting rod extends, which can be telescopic for the adjustment of the height, which has a pivoting head which is articulated to a block protruding from the aforementioned bracket.

Usually the pivoting head, which can rotate with respect to the block, is conveniently contoured so as to interact with a portion of the block that is complementarily shaped so as to define two configurations, one for deploying and the other for closing the kickstand.

Elastic means present inside the block make it possible to stabilize the two configurations, which can be changed only with an effort on the part of the user.

In a different type of bicycle kickstand, the pivoting head does not have any contouring, and instead there is a contoured translating element, proximate to the pivoting head and anchored by way of an elastic means to the supporting rod.

The elastic means keeps the contoured translating element always in contact with the complementarily-shaped element of the block and makes it possible to fix the relative positions of the two contoured elements in the deployed and stowed configurations.

Such conventional techniques have, however, a number of drawbacks.

In particular, the region of interaction between the contoured element of the supporting rod and the complementarily-shaped element of the block is usually arranged outside the profile of the block, and dirt can accumulate, which can cause problems with operation.

Furthermore, such bicycle kickstands have an unappealing visual impact.

Also, generally these bicycle kickstands are made of metallic material or made of plastic material and, in the stowed configuration, cycling over bumps and on uneven roads can generate vibrations of the supporting rod which manifest as annoying tapping sounds.

The aim of the present invention is to provide a bicycle kickstand which is capable of improving the known art in one or more of the above mentioned aspects.

Within this aim, an object of the invention is to provide a bicycle kickstand in which dirt does not settle between the contoured elements that are necessary to establish the deployed and stowed configurations.

Another object of the invention is to provide a bicycle kickstand with an appealing visual impact.

A further object of the invention is to provide a bicycle kickstand that is capable of damping the vibrations induced by the supporting rod in the stowed configuration.

Another object of the invention is to provide a bicycle kickstand that is highly reliable, easy to implement and at low cost.

This aim and these and other objects which will become better apparent hereinafter are achieved by a bicycle kickstand, comprising: an anchoring bracket, said bracket being provided with a block which comprises a first, cam-shaped element, said first element having a first portion which defines a stowed configuration for said bicycle kickstand and a second portion which defines a deployed configuration for said bicycle kickstand; a supporting rod which comprises a pivoting head, which is coupled within said block, said supporting rod being provided with a second shaped element, which is shaped complementarily to said first element of said block and is in contact with it; characterized in that a region of interaction between said first shaped element and said second shaped element is within a profile of said block and is hidden from view.

Further characteristics and advantages of the invention will become better apparent from the description of a preferred, but not exclusive, embodiment of the bicycle kickstand according to the invention, which is illustrated by way of non-limiting example in the accompanying drawings wherein:
- Figure 1 is a perspective view of the bicycle kickstand according to the invention in the deployed configuration;
- Figure 2 is a different perspective view of the bicycle kickstand in Figure 1;
- Figure 3 is a cross-sectional view of the bicycle kickstand in Figure 2;
- Figure 4 is a perspective view of the bicycle kickstand in Figure 1, in the stowed configuration;
- Figure 5 is a cross-sectional view of the bicycle kickstand in Figure 4;
- Figure 6 is a cross-sectional view of a detail of the bicycle kickstand in Figure 5;
- Figure 7 is an enlarged view of a detail of the bicycle kickstand in Figure 1;
- Figures 8a and 8b are two different views of a detail of the bicycle kickstand in Figure 1;
- Figure 9a is a general perspective view of a detail of the bicycle kickstand in Figure 1;
- Figure 9b is a side view of an additional detail of the bicycle kickstand in Figure 1.

With reference to the figures, a bicycle kickstand according to the invention is generally designated by the reference numeral 10.

Such bicycle kickstand comprises an anchoring bracket 11, which has one or more holes 12 that are adapted for the insertion of elements for affixing, which are not shown in the figures.

The bicycle kickstand 10 comprises a supporting rod 13 and a block 15 for connection between such supporting rod 13 and such bracket 11.

The block 15, extending from the bracket 11, protruding from it and in a single piece with it, comprises a first, cam-shaped element 16, which has two portions 17a and 17b which determine positions of stable equilibrium of the bicycle kickstand 10.

This first, cam-shaped element 16 can be present proximate to only one of the two outer surfaces of the block 15, which are opposing and mutually parallel and perpendicular to the hinging axis of the rod 13; or such cam-shaped element 16 can be present proximate to both of the outer lateral surfaces of the block 15.

The two portions are respectively:
- the first portion 17a, proximate to the bracket 11 and adapted to define the stowed configuration of the bicycle kickstand 10, which corresponds to an inactive configuration;
- the second portion 17b, substantially opposite with respect the bracket 11, in the block 15, and adapted to define the deployed configuration of the bicycle kickstand 10, which corresponds to an operational configuration.

The portions 17a and 17b are, for example, recesses.

In a variation of embodiment, not shown in the figures, the block can be not in a single piece with the bracket.

In another variation of embodiment, not shown in the figures, the first, cam-shaped element can be not in a single piece with the block 15.

The supporting rod 13 comprises, at the end interfacing with the block 15, a pivoting head 14 which is arranged inside the block 15.

This pivoting head 14 is coupled so as to rotate about a pin, non visible in the figures, which is inserted into a central hole 18.

Such hole 18 extends in a direction perpendicular to the direction of extension of the rod 13 and extends from the lateral surface of the pivoting head 14, the opening of the hole being substantially parallel to the plane of movement of the rod 13.

Such hole 18 passes through the pivoting head 14 and, at least partially, the first, cam-shaped element 16.

The supporting rod 13 has a second shaped element 19, which is shaped complementarily to the first shaped element 16 of the block 15.

In particular, the second shaped element 19 is complementary to the first shaped element 16 at the portions 17a and 17b.

The block 15 and the second shaped element 19 are made of plastic material and/or metallic material such as, for example, aluminum.

In this manner, any vibrations induced by the rod 13, in the stowed configuration, during the motion of the bicycle, are damped and the tapping is reduced and less with respect to the tapping produced by conventional bicycle kickstands that are made entirely of metallic material.

The second shaped element 19 has a substantially truncated pyramid-like extension and a through hole extending in the direction of the height of the truncated pyramid, for the insertion with play of the supporting rod 13.

Such second shaped element 19 surrounds the supporting rod 13 and is able to slide along it.

The second shaped element 19 has a convex end portion 20 which is always in contact, at least at one point, with the first shaped element 16.

At the opposite end with respect to the end in contact with the first shaped element 16, the second shaped element 19 is in contact with an elastic means, such as for example a spring 21.

The spring 21 surrounds the supporting rod 13 with its turns, which can also, at least partially, slide thereupon.

On the rod 13 there is a coupling element 22, which is fixed to the supporting rod 13 and adapted to obstruct the sliding of the spring 21 along the rod 13.

In particular such coupling element 22 is at the end of the spring 21 that lies opposite the end in contact with the second shaped element 19.

In this manner, during the rotation of the rod 13, in order to pass from a stowed configuration to a deployed configuration, and vice versa, the spring 21 is compressed, by virtue of the sliding of the second shaped element 19 on the rod 13, but it does not slide beyond the coupling element 22.

The coupling element 22 can be, in a variation of embodiment not shown in the figures, in a single piece with the rod 13 and made, for example, by conveniently shaping the rod 13 .

The spring 21 is preloaded by compression and has a length and a rigidity that are such as to constantly push the second shaped element 19 against the first shaped element 16.

One of the peculiarities of the invention consists in that the two shaped elements, respectively 16 and 19, have at least the region of interaction always inside the profile of the block 15 and hidden from view.

In this manner the region interfacing between the two shaped elements is protected from dirt and a pleasing visual impact is obtained.

The block 15 has, on at least one of the outer lateral surfaces 25, which are perpendicular to the direction of extension of the hole 18, a seat 23 for the accommodation of a removable snap-on cover 24.

In the example shown in the figures, the seat 23 and the cover 24 are circular.

Such cover 24 is adapted to hide the rotation pivot of the pivoting head 14, thus giving the bicycle kickstand 10 an even more pleasing visual impact.

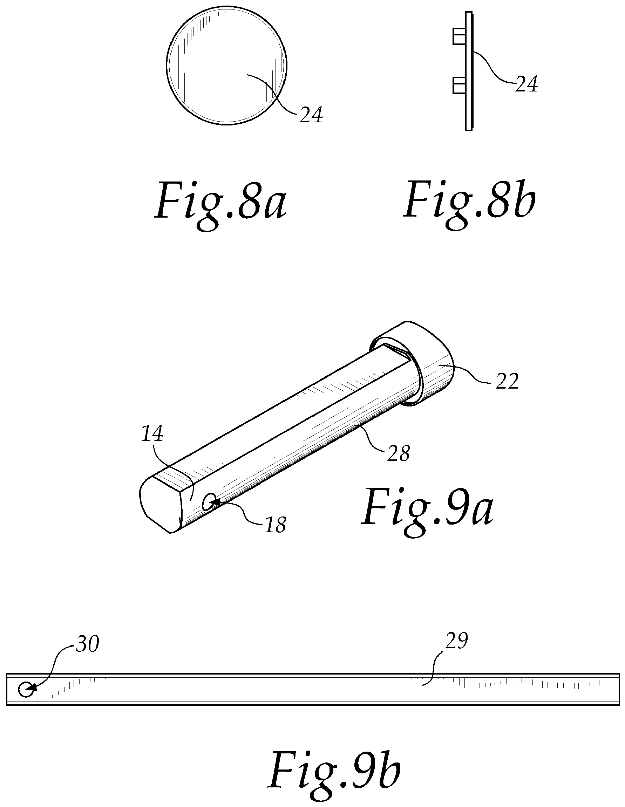

With reference to Figures 9a and 9b, the supporting rod 13 is constituted by a first oblong element 28, which comprises the pivoting head 14 inside which a second oblong element 29 is inserted.

In particular the second oblong element 29 is inserted at least partially inside the first oblong element 28 in the direction of extension of such first oblong element 28.

This first oblong element 28 is provided with a dead hole, not shown in the figures, which extends, starting from the coupling element 22, in the direction of extension of the element 28 .

This dead hole is adapted for the insertion of the second oblong element 29.

The second oblong element 29 is provided with a through hole 30 in a direction perpendicular to the direction of extension of the second element 29, which is adapted to correspond to a hole that is present on the first oblong element 28, for inserting an element for affixing the second oblong element 29 to the first oblong element 28, such as, for example, a screw or a pin.

The supporting rod 13 can be provided in a single piece, in a variation of embodiment.

Also, in a further embodiment, the supporting rod is constituted by more than two elements.

The supporting rod 13 is provided with a terminal foot 26 which is adapted to touch the ground in the deployed configuration.

The foot 26 comprises a widened base 27 in order to allow a greater support of the rod.

Operation of the bicycle kickstand, according to the invention, is the following.

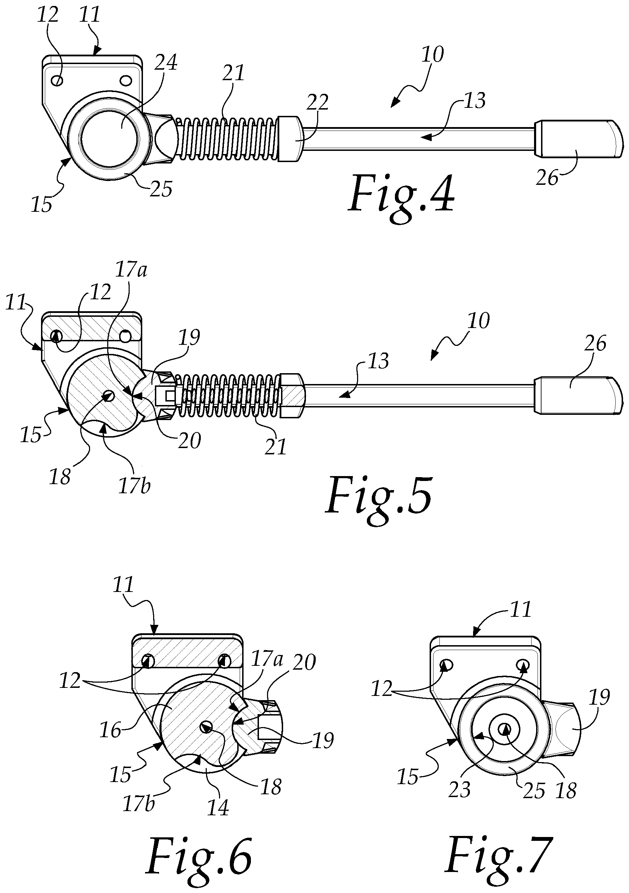

Figures 4 and 5 show the bicycle kickstand in the inactive or stowed configuration, with the second shaped element 19 facing toward the first portion 17a of the first, cam-shaped element 16.

When it is necessary to deploy the bicycle kickstand, the supporting rod 13 is moved, making the pivoting head 14 rotate about its pin, thus bringing the second shaped element 19 to face the second portion 17b of the first shaped element 16.

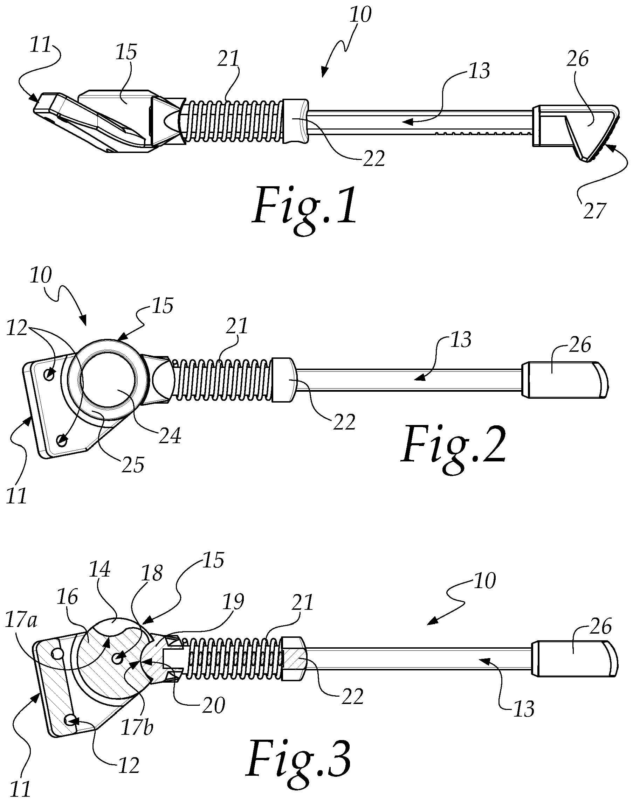

Such configuration shown in Figures 2 and 3 correspond to the operational or deployed configuration.

During this phase, at least one point of the convex portion 20 of the second shaped element 19 is always in contact with at least one point of the first shaped element 16, owing to the thrust received from the compressed spring 21.

In practice it has been found that the invention fully achieves the intended aim and objects by providing a bicycle kickstand, in which the region of interaction between the shaped element of the block and the shaped element of the rod is inside the profile of the block and is hidden from view.

Furthermore it should be noted that the block and the shaped element of the rod made of plastic material and/or metallic material such as, for example, aluminum, thus damping the vibrations induced on the rod and reduce the consequent tapping noise.

The invention, thus conceived, is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102018000002886 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bicycle kickstand (10), comprising: an anchoring bracket (11), said bracket (11) being provided with a block (15) which comprises a first, cam-shaped element (16), said first element (16) having a first portion (17a) which defines a stowed configuration for said bicycle kickstand (10) and a second portion (17b) which defines a deployed configuration for said bicycle kickstand (10); a supporting rod (13) which comprises a pivoting head (14), which is coupled within said block (15), said supporting rod (13) being provided with a second shaped element (19), which is shaped complementarily to said first element (16) of said block (15) and is in contact with it; **characterized in that** a region of interaction between said first shaped element (16) and said second shaped element (19) is within a profile of said block (15) and is hidden from view.

2. The bicycle kickstand (10) according to claim 1, **characterized in that** said block (15) and said second shaped element (19) are made of plastic and/or metallic material.

3. The bicycle kickstand (10) according to one or more of the preceding claims, **characterized in that** it is provided with a hole (18) for the insertion of a rotation pivot for said pivoting head (14), with extension in a direction perpendicular to the surface of said head (14) and passing through said pivoting head (14) and, at least partially, through said first, cam-shaped element (16).

4. The bicycle kickstand (10), according to one or more of the preceding claims, **characterized in that** said block (15) has, on at least one of the outer lateral surfaces (25), which are perpendicular to the direction of extension of said hole (18), a seat (23) for the accommodation of a cover (24).

5. The bicycle kickstand (10) according to one or more of the preceding claims, **characterized in that** said first portion (17a) is proximate to said bracket (11) and said second portion (17b) is substantially opposite with respect to said bracket (11), in said block (15).

6. The bicycle kickstand (10) according to one or more of the preceding claims, **characterized in that** said second shaped element (19) has a substantially truncated pyramid-like extension and a through hole extending in the direction of the height of the truncated pyramid, for the insertion with play of said supporting rod (13), said second shaped element (19) surrounding said supporting rod (13) and being able to slide along it.

7. The bicycle kickstand (10) according to one or more of the preceding claims, **characterized in that** said second shaped element (19) has an end portion (20) which is always in contact, at least at one point, with the first shaped element (16).

8. The bicycle kickstand (10) according to one or more of the preceding claims, **characterized in that** at the opposite end with respect to the end in contact with said first shaped element (16), said second shaped element (19) is in contact with a spring (21) which with its turns surrounds said supporting rod (13).

9. The bicycle kickstand (10) according to one or more of the preceding claims, **characterized in that** a coupling element (22) is present on said rod (13), at the end of said spring (21) that lies opposite the end in contact with said second shaped element (19).

10. The bicycle kickstand (10) according to one or more of the preceding claims, **characterized in that** said spring (21) is preloaded by compression.
